# EUROPEAN PATENT SPECIFICATION

(11) **EP 3 281 806 B1**
(45) Date of publication and mention of the grant of the patent: **06.05.2020**
(21) Application number: 16776424.0
(22) Date of filing: 28.03.2016
(51) Int. Cl.: B60C 11/13

(54) **TIRE**
REIFEN
PNEUMATIQUE

(30) Priority: 10.04.2015 JP 2015080721
(43) Date of publication of application: 14.02.2018
(73) Proprietor: Bridgestone Corporation, Tokyo 104-8340 (JP)
(72) Inventor: MISHIMA, Sayaka, Tokyo 104-8340 (JP)
(74) Representative: Oxley, Robin John George
(86) International application number: PCT/JP2016/059869
(87) International publication number: WO 2016/163256

(56) References cited:
- WO-A1-2008/114668
- WO-A1-2012/018128
- WO-A1-2012/090917
- JP-A- H03 276 802
- JP-A- 2008 222 007
- JP-A- 2012 061 899
- JP-A- 2013 244 854
- JP-A- 2014 012 477
- JP-A- 2014 012 478
- JP-A- 2015 057 344
- US-A- 2 819 751
- US-A- 6 119 744
- US-A1- 2015 083 306

## Description

### TECHNICAL FIELD

The present invention relates to a tire in which a groove extending in the tire circumferential direction is formed in the tread part.

### BACKGROUND ART

Conventionally, for pneumatic tires mounted on vehicles (hereinafter referred to as tires), various methods have been used to suppress the temperature rise of the tires when the vehicles are running. In particular, the temperature rise is conspicuous for heavy duty tires mounted on trucks or buses.

In this respect, for example, a tire has been proposed in which projections are provided at the groove bottom of a groove formed in the tread part of the tire, the projections extending linearly from one groove wall to the other groove wall (for example, Patent Literature 1).

For such a tire, when the tire rolls, air flows passing inside the groove becomes turbulent due to the projections, and the turbulences promote heat dissipation from the tread part. This suppresses the temperature rise of the tread part. Attention is also drawn to the disclosures of US6119744, JP2013-244854, US2015/083306 and JP2015-057344.

### CITATION LIST

### PATENT LITERATURE

Patent Literature 1: International Publication No. WO2012/090917

### SUMMARY OF INVENTION

### TECHNICAL PROBLEM

When a tire rolls and the land parts at both side of the groove come in contact with a road surface, the land parts are compressively deformed, while being bulgingly deformed in the direction in which the groove width narrows. Then, when the land parts at both side of the groove come apart from the road surface, the bulging deformation returns to the original state. In this way, every time the land parts of both sides of the groove come in contact with the road surface, the land parts are bulgingly deformed repeatedly in the direction in which the groove width narrows. Hence, the projections formed in the groove repeatedly receive compression forces from both sides, one groove wall and the other groove wall.

In a tire according to the conventional art, the projections are linearly continuous from one groove wall to the other groove wall. When such projections repeatedly receive the compression forces from both sides, repeated shear deformations occur locally at the center part of the projection in the tire width direction, and a crack may occur in the projection.

If such a crack occurs in the projection, the projection cannot generate the intended turbulence, and this may reduce the effect to suppress the temperature rise of the tread part.

The present invention has been made in view of the above problems, and an object thereof is to provide a tire in which the durability of the projection is improved by curbing the occurrence of a crack in the projection formed in the groove, while positively suppressing the temperature rise of the tread part.

### SOLUTION TO PROBLEM

A tire according to the present invention is a tire in which a groove extending in a tire circumferential direction is formed in a tread part, wherein a projection extending in a direction intersecting the tire circumferential direction is provided at a groove bottom of the groove, the projection includes: a first projection part extending from one groove wall forming the groove toward the other groove wall forming the groove, and terminating short of the other groove wall; and a second projection part extending from the other groove wall toward the one groove wall, and terminating short of the one groove wall, and a terminal part of the first projection part terminating short of the other groove wall is arranged closer to the other groove wall than a terminal part of the second projection part terminating short of the one groove wall making it possible to prevent a gap passing through the projection in the tire circumferential direction from being formed between the one groove wall and the other groove wall, and wherein an angle formed between an extending direction of the first projection part and the tire circumferential direction, and an angle formed between an extending direction of the second projection part and the tire circumferential direction are within a range of 10 to 60 degrees.

### BRIEF DESCRIPTION OF DRAWINGS

[Fig. 1] Fig. 1 is a cross-sectional view of a tire 1 according to a first embodiment of the present invention, taken along the tire width direction and the tire radial direction.
[Fig. 2] Fig. 2 is a partially broken perspective view of a groove according to the first embodiment of the present invention.
[Fig. 3] Fig. 3 is a plan view illustrating the shape of the groove according to the first embodiment of the present invention in a tread surface view.
[Fig. 4] Fig. 4 is an enlarged plan view of a projection according to the first embodiment of the present invention.
[Fig. 5] Fig. 5 is a cross-sectional view of the groove taken along the tire width direction and the tire radial direction when viewed from direction F1 in Fig. 3.
[Fig. 6] Fig. 6 is a cross-sectional view of the projection taken along line A-A in Fig. 3 and the tire radial direction.
[Fig. 7] Fig. 7 is a graph illustrating measurement results of measuring the relationship between angles of an extending direction of a first projection part and an extending direction of a second projection part with respect to the tire circumferential direction, and the heat transfer rate (shown as the index) at the groove.
[Fig. 8] Fig. 8 is a graph illustrating measurement results of measuring the relationship between a coefficient which the length L of the projection is multiplied by to define the predetermined interval P and the heat transfer rate at the groove.
[Fig. 9] Fig. 9 is a graph illustrating measurement results of measuring the relationship between a coefficient which the groove depth D is multiplied by to define the height H and the heat transfer rate at the groove.
[Fig. 10] Fig. 10 is a graph illustrating measurement results of measuring the relationship between a coefficient which the groove width W is multiplied by to define the distance Lx between the first and second projection parts, and the strain and the heat transfer rate.
[Fig. 11] Fig. 11 is a graph illustrating measurement results of measuring the relationship between a coefficient which the groove width W is multiplied by to define the groove wall distance Lw1 between the first projection part and a groove wall (the groove wall distance Lw2 between the second projection part and a groove wall), and the strain and the heat transfer rate.
[Fig. 12] Fig. 12 is a graph illustrating measurement results of measuring the relationship between a width of the projection, and the strain and the heat transfer rate.
[Fig. 13] Fig. 13 is a graph illustrating measurement results of measuring the relationship between a coefficient which the groove width W is multiplied by to define the terminal distance Lw between the terminal parts of the first and second projection parts, and the strain and the heat transfer rate.

### DESCRIPTION OF EMBODIMENTS

### [First Embodiment]

### (1) Schematic Structure of Tire

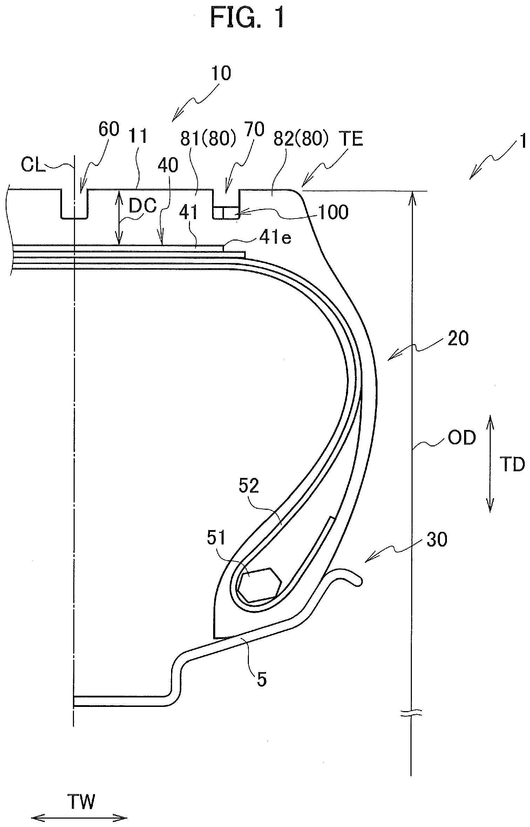

Descriptions will be provided for a tire according to a first embodiment of the present invention with reference to the drawings. First, a schematic structure of a tire 1 according to this embodiment will be described with reference to Fig. 1.

Fig. 1 is a cross-sectional view of the tire 1 according to the first embodiment, taken along a tire width direction TW and a tire radial direction TD. The tire 1 according to this embodiment has a symmetrical shape with respect to a tire equator line CL. Note that the tire 1 may have an asymmetrical shape.

The tire 1 according to this embodiment is assumed to be a pneumatic tire which is filled with air after assembled to a standard rim 5. Note that the gas filling the tire 1 assembled to the standard rim 5 is not limited to air, but the tire 1 may also be filled with an inert gas such as nitrogen gas. In addition, a cooling liquid (coolant) may be used for filling.

The tire 1 is preferably used for a heavy duty tire (TBR tire) mounted on a track or a bus (TB). The tire 1 has a thicker rubber gauge (rubber thickness) of a tread part 10 than pneumatic tires mounted on passenger vehicles or the like. Specifically, when OD is the tire outer diameter, and DC is the rubber gauge of the tread part 10 at the tire equator line CL, the tire 1 satisfies DC/OD ≥ 0.005.

Here, the tire outer diameter OD (unit: mm) is a diameter of the tire 1 at a portion where the outer diameter of the tire 1 is largest (generally, at the tread part 10 around the tire equator line CL). A rubber gauge DC (unit: mm) is the rubber thickness of the tread part 10 at the tire equator line CL. The rubber gauge DC does not include the thickness of a belt layer 40. Note that as illustrated in Fig. 1, in the case where a groove is formed at a position including the tire equator line CL, the rubber gauge DC is the rubber thickness of the tread part 10 at a position adjacent to the groove.

As illustrated in Fig. 1, the tire 1 includes the tread part 10 which comes in contact with a road surface, a side wall 20 continuing to the tread part 10 and positioned inward of the tread part 10 in the tire radial direction TD, and a bead 30 continuing to the side wall 20 and positioned inward of the side wall 20 in the tire radial direction TD.

The tread part 10 includes a tread ground contact surface 11 which comes in contact with a road surface when the tire rolls. Formed in the tread part 10 are grooves extending in the tire circumferential direction TC.

In this embodiment, a groove 60 provided on the tire equator line CL and a groove 70 provided on a tread end TE side of the tread ground contact surface 11 are formed in the tread part 10 as the grooves.

Here, in the tire 1 according to this embodiment, "tread end TE" means the outermost position in the tire width direction of the tread ground contact surface which is a tire surface coming in contact with a road surface (ground surface) in the state where the tire 1 is assembled to the standard rim 5 and filled with a standard internal pressure and a standard load is applied to the tire 1.

In addition, the "standard rim" means a normal rim specified in the following standard in accordance with the size of a tire, the "standard internal pressure" means an air pressure corresponding to the maximum load capacity of a single wheel in the applied size, which is specified in the following standard, and the "standard load" means the maximum load (maximum load capacity) of a single wheel in the applied size in the following standard. Then, the standard is an industrial standard effective for the area where the tire is produced or used. For example, in Japan, it is "JATMA YEAR BOOK" of "JAPAN AUTOMOBILE TIRE MANUFACTURES ASSOCIATION, INC."; in the United States, "YEAR BOOK" of "THE TIRE AND RIM ASSOCIATION, INC."; and in Europe, "STANDARD MANUAL" of "The European Tyre and Rim Technical Organisation".

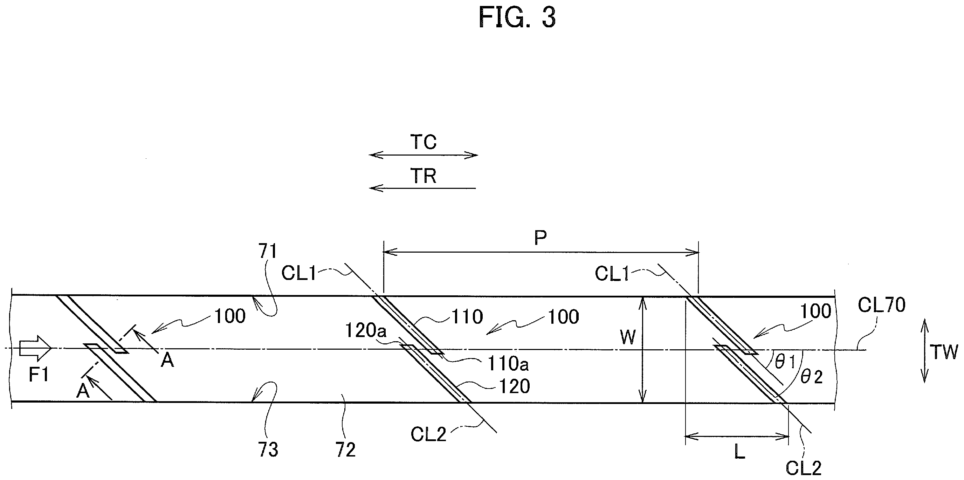

The groove 70 includes one groove wall 71, the other groove wall 73 facing the one groove wall 71, and a groove bottom 72 continuing to the one groove wall 71 and the other groove wall 73 (see Fig. 3).

Provided on the groove bottom 72 of the groove 70 are projections 100 extending in a direction intersecting the tire circumferential direction TC. Note that although the projections 100 may be provided in the groove 60 positioned on the tire equator line CL, it is preferable that the projections 100 be provided at least in the groove 70, which is the closest to an end in the tire width direction TW of a belt layer 40 to be described later.

This is due to the following reason. That is, since the temperature of the end of the belt layer 40 in the tire width direction TW tends to rise when the tire 1 rolls, it is preferable to provide the projections 100 at least in the groove 70 which is the closest to the end of the belt layer 40 in order to suppress the temperature rise effectively by means of the projections 100 formed in the groove. Note that the detailed structure of the projection 100 will be described later.

In the tread part 10, multiple sections of land parts 80 are formed by the groove 70 being formed. Specifically, formed inward of the groove 70 in the tire width direction TW is a land part 81, and formed outward of the groove 70 in the tire width direction TW is a land part 82. Note that in this embodiment, the land part 81 and the land part 82 are appropriately referred to simply as land parts 80.

Provided inward of the tread part 10 in the tire radial direction TD is the belt layer 40 including multiple belts 41. Arranged outward of an end 41e of a belt 41 in the tire radial direction TD is the groove 70 formed in the tread part 10.

Further, provided inward of the belt layer 40 in the tire radial direction TD is a carcass layer 52 spanning a pair of right and left bead cores 51 and forming a skeleton of the tire 1. Note that the ends of the carcass layer 52 are folded so as to wrap around the bead cores 51.

### (2) Structure of Projection

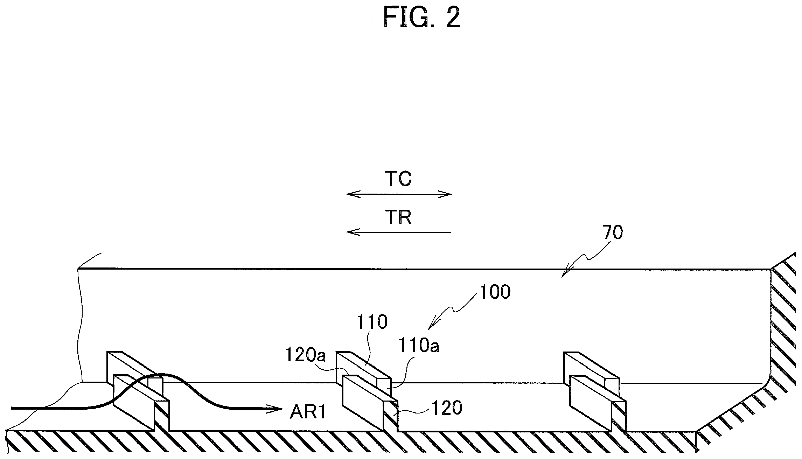

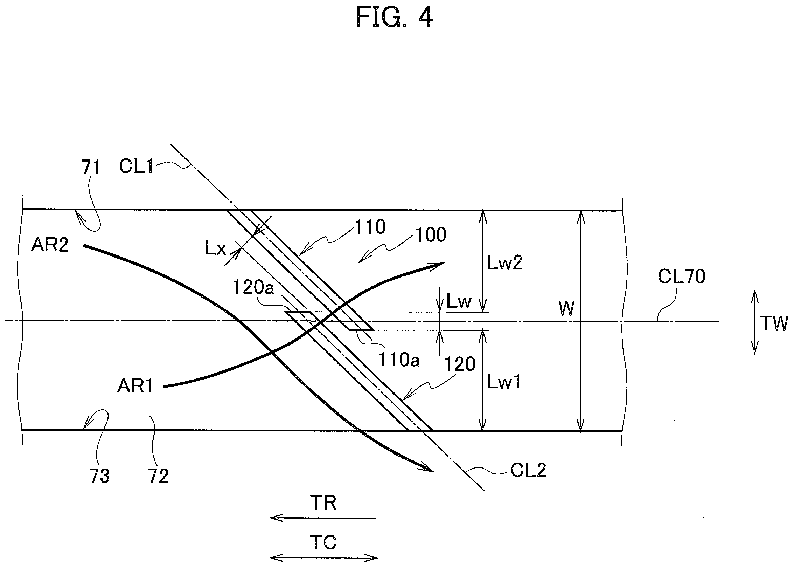

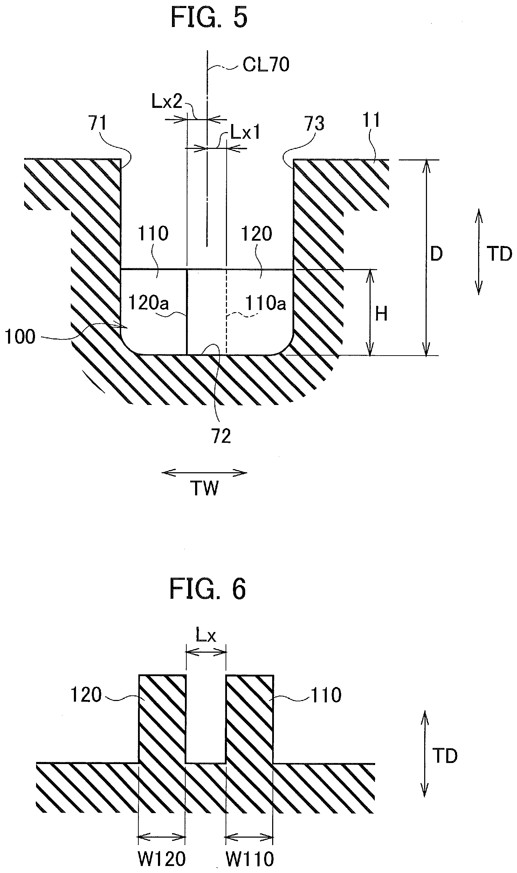

Next, the structure of the projection 100 will be described with reference to the drawings. Fig. 2 is a partially broken perspective view of a groove according to the first embodiment of the present invention. Fig. 3 is a plan view illustrating the shape of the groove according to the first embodiment of the present invention in a tread surface view. Fig. 4 is an enlarged plan view of the projection according to the first embodiment of the present invention. Fig. 5 is a cross-sectional view of the groove taken along the tire width direction and the tire radial direction when viewed from direction F1 in Fig. 3. Fig. 6 is a cross-sectional view of the projection taken along line A-A in Fig. 3 and the tire radial direction.

Here, as illustrated in Fig. 2, the rotational direction TR is defined in this embodiment, for convenience of explanation, as a direction in which the tire 1 rotates when a vehicle with the tire 1 mounted thereon moves forward. Note that the rotational direction TR when the tire 1 is mounted on a vehicle is not particularly specified.

As illustrated in Figs. 2 and 3, multiple projections 100 are provided in the groove 70. The projections are provided in the tire circumferential direction TC with the predetermined intervals P.

The projection 100 includes a first projection part 110 and a second projection part 120. The first projection part 110 extends from one groove wall 71 forming the groove 70 toward the other groove wall 73 forming the groove 70, and terminates short of the other groove wall 73.

Note that in this embodiment, the one groove wall 71 is formed at the land part 81 which is inward of the groove 70 in the tire width direction TW, and the other groove wall 73 is formed at the land part 82 which is outward of the groove 70 in the tire width direction TW.

Specifically, the end of the first projection part 110 on the one groove wall 71 side is connected to the one groove wall 71. The end of the first projection part 110 on the other groove wall 73 side has a terminal part 110a terminating short of the other groove wall 73. In other words, the terminal part 110a of the first projection part 110 is positioned between the one groove wall 71 and the other groove wall 73.

The second projection part 120 extends from the other groove wall 73 toward the one groove wall 71, and terminates short of the one groove wall 71. The end of the second projection part 120 on the other groove wall 73 side is connected to the other groove wall 73. The end of the second projection part 120 on the one groove wall 71 side has a terminal part 120a terminating short of the one groove wall 71. In other words, the terminal part 120a of the second projection part 120 is positioned between the one groove wall 71 and the other groove wall 73.

In addition, the terminal part 110a of the first projection part 110 is arranged closer to the other groove wall 73 than the terminal part 120a of the second projection part 120. With this, the projection 100 has an overlapping part (not illustrated) where a part of the first projection part 110 and a part of the second projection part 120 overlaps in the tire circumferential direction TC. Further, in a cross-sectional view of the groove 70 taken along the tire radial direction TD and the tire width direction TW, the projection 100 continues from the one groove wall 71 to the other groove wall 73 by means of the first projection part 110 and the second projection part 120 (see Fig. 5).

In this embodiment, the extending direction of the first projection part 110 and the extending direction of the second projection part 120 are parallel. Thus, the center line CL1 of the first projection part 110 and the center line CL2 of the second projection part 120 are parallel. Note that the center line CL1 is a virtual line passing through the center of the first projection part 110 in the width direction thereof, and the center line CL2 is a virtual line passing through the center of the second projection part 120 in the width direction thereof.

In a tread surface view of the tire 1, when L is the length of the projection 100 along the groove center line CL70 passing through the center of the groove 70, and P is the predetermined intervals in the tire circumferential direction TC, with which the projections 100 are formed, it is preferable that the predetermined interval P be 0.75 times or more and 10 times or less the length L. In other words, it is preferable that the relationship between the predetermined interval P and the length L satisfy 0.75L ≤ P ≤ 10L.

Note that as illustrated in Fig. 3, the groove center line CL70 is a virtual line passing through the center in the groove width direction orthogonal to the extending direction of the groove 70, and is parallel with the tire circumferential direction TC in this embodiment. The length L is the length along the groove center line CL70 from one end to the other end of the projection 100. The predetermined interval P is the distance between two projections 100 adjacent along the groove center line CL70.

The extending direction of the first projection part 110 and the extending direction of the second projection part 120 are inclined with respect to the tire circumferential direction TC. In this embodiment, the angle θ1 formed between the extending direction of the first projection part 110 and the tire circumferential direction TC, and the angle θ2 formed between the extending direction of the second projection part 120 and the tire circumferential direction TC are in a range of 10 to 60 degrees.

Note that the extending direction of the first projection part 110 is a direction along the center line CL1 of the first projection part 110, and the extending direction of the second projection part 120 is a direction along the center line CL2 of the second projection part 120.

In addition, the angle θ1 and the angle θ2 are the same in this embodiment. However, the angle θ1 and the angle θ2 do not necessarily need to be the same. In other words, the angle θ1 and the angle θ2 may be different from each other as long as they are within the above range.

As illustrated in Fig. 4, when the groove width W is the width of the groove 70, it is preferable that the distance Lx between the first projection part 110 and the second projection part 120 in a direction orthogonal to the extending direction of the first projection part 110 be 0.1 times or more and 0.3 times or less the groove width W. In other words, it is preferable that the relationship between the distance Lx and the groove width W satisfy 0.1W ≤ Lx ≤ 0.3W. Note that the groove width W is the width of the groove 70 in the groove width direction orthogonal to the extending direction of the groove 70. In this embodiment, since the extending direction of the groove 70 is the tire circumferential direction TC, the groove width W is the width of the groove 70 in the tire width direction TW orthogonal to the tire circumferential direction TC.

Here, the direction orthogonal to the extending direction of the first projection part 110 is the direction orthogonal to the center line CL1 of the first projection part 110.

In addition, when the groove width W is the width of the groove 70, it is preferable that both the groove wall distance Lw1 between the terminal part 110a of the first projection part 110 and the other groove wall 73 and the groove wall distance Lw2 between the terminal part 120a of the second projection part 120 and the one groove wall 71 be 0.1 times or more and 0.4 times or less the groove width W. In other words, it is preferable that the relationship between the groove wall distance Lw1 (and the groove wall distance Lw2) and the groove width W satisfy 0.1W ≤ Lw1 (and Lw2) ≤ 0.4W.

In this embodiment, the groove wall distance Lw1 is the same as the groove wall distance Lw2. However, the groove wall distance Lw1 does not necessarily need to be the same as the groove wall distance Lw2. For example, in the case where the one groove wall 71 is deformed more than the other groove wall 73, the relationship between the groove wall distance Lw1 and the groove wall distance Lw2 may satisfies Lw1 > Lw2.

In addition, when the groove width W is the width of the groove 70, it is preferable that the terminal distance Lw between the terminal part 110a of the first projection part 110 and the terminal part 120a of the second projection part 120 in the tire width direction TW be 0.2 times or more and 0.6 times or less the groove width W. In other words, it is preferable that the relationship between the terminal distance Lw and the groove width W satisfy 0.2W ≤ Lw ≤ 0.6W.

In addition, as illustrated in Fig. 5, in the tire width direction TW, the distance Lx1 between the terminal part 110a of the first projection part 110 and the groove center line CL70 in the tire width direction TW and the distance Lx2 between the terminal part 120a of the second projection part 120 and the groove center line CL70 are the same in this embodiment. However, the distance Lx1 and the distance Lx2 do not necessarily need to be the same. For example, in the case where the one groove wall 71 is deformed more than the other groove wall 73, the relationship between the distance Lx1 of the first projection part 110 extending from the one groove wall 71 and the distance Lx2 of the second projection part 120 extending from the other groove wall 73 may satisfy Lx1 > Lx2.

In addition, as illustrated in Fig. 5, when H is the height of the first projection part 110 and the second projection part 120 from the groove bottom 72, and D is the depth from the tread ground contact surface 11 of the groove 70 to the groove bottom 72 (at the deepest part), it is preferable that the height H be 0.03 times or more and 0.4 times or less the depth D. In other words, it is preferable that the relationship between the height H and the depth D satisfy 0.03 D < H ≤ 0.4D.

As illustrated in Fig. 6, in this embodiment, it is preferable that both the width W110 of the first projection part 110 and the width W120 of the second projection part 120 be 1 mm or more and 4 mm or less. Here, the width W110 of the first projection part 110 is the length in the direction orthogonal to the center line CL1 along the extending direction of the first projection part 110, and the width W120 of the second projection part 120 is the length in the direction orthogonal to the center line CL2 along the extending direction of the second projection part 120.

In this embodiment, the width W110 of the first projection part 110 and the width W120 of the second projection part 120 are the same. However, the width W110 and the first projection part 110 and the width W120 of the second projection part 120 do not necessarily need to be the same. For example, in the case where the one groove wall 71 is deformed more than the other groove wall 73, the relationship between the width W110 of the first projection part 110 extending from the one groove wall 71 and the width W120 of the second projection part 120 extending from the other groove wall 73 may satisfy W110 > W120.

### (3) Operation • Effect

For the tire 1 according to this embodiment, since projections 100 are formed on the groove bottom 72 of the groove 70 extending in the tire circumferential direction TC, rotation of the tire 1 causes air flows AR1 and AR2 (relative wind) in the direction opposite to the rotational direction TR in the groove 70 (see Fig. 4).

Specifically, a part of the air flow AR1 along the other groove wall 73 of the groove 70 cannot proceed along the groove 70 because of the projection 100 positioned in the traveling direction, hence go over the projection 100. At this time, the air flow AR1 changes into a spiral (swirling) flow. In addition, because the air flow AR1 proceeds pulling surrounding air, the amount of air flow increases and the speed of the air flow AR1 increases. This promotes heat dissipation from the tread part 10.

A part of the air flow AR2 along the one groove wall 71 of the groove 70 proceeds along the extending direction of the projection 100. Thereafter, on the other groove wall 73 side of the groove 70, the air flow AR2 flows out of the groove 70. As a result, since the air accumulating heat by passing inside the groove 70 flows to the outside, heat dissipation from the tread part 10 is promoted.

In addition, in the tire 1 according to this embodiment, the projection 100 includes the first projection part 110 and the second projection part 120. The first projection part 110 extends from the one groove wall 71 toward the other groove wall 73, and terminates short of the other groove wall 73. The second projection part 120 extends from the other groove wall 73 toward the one groove wall 71, and terminates short of the one groove wall 71. In other words, both the first projection part 110 and the second projection part 120 are apart from either the groove walls 71 or 73 of the groove walls 71 and 73 of the groove 70.

According to the tire 1 of this embodiment, even when the land parts 80 on both sides of the groove 70 deform when the tire rolls, although both the first projection part 110 and the second projection part 120 receive compression force from only one of the land parts 80, it is possible to prevent the first projection part 110 and the second projection part 120 from receiving compression force from the land parts 80 on both sides. This makes it possible to reduce shear deformation generated in the first projection part and the second projection part caused by the compression force receiving from the land parts 80, compared to the case where the projection linearly continues from the one groove wall 71 to the other groove wall 73 as in the conventional art.

Thus, it is possible to curb the occurrence of a crack in the projection 100 including the first projection part 110 and the second projection part 120, and thereby possible to positively generate intended turbulences with the projection 100. In other words, curbing the occurrence of a crack in the projection 100 improves the durability of the projection 100, while positively suppressing the temperature rise of the tread part 10.

In addition, since the projection 100 includes the first projection part 110 and the second projection part 120, it is possible, also in the case where the projection 100 receives tensile force from the land parts 80 on both sides, to curb the occurrence of a crack caused by strain (deformation) due to tensile force.

In addition, in the tire 1 according to this embodiment, the terminal part 110a of the first projection part 110 is arranged closer to the other groove wall 73 than the terminal part 120a of the second projection part 120. In other words, in a cross-sectional view of the groove 70 taken along the tire radial direction TD and the tire width direction TW, the first projection part 110 and the second projection part 120 of the projection 100 continues from the one groove wall 71 to the other groove wall 73.

This makes it possible to prevent a gap passing through the projection 100 in the tire circumferential direction TC from being formed between the one groove wall 71 and the other groove wall 73, which in turn makes it possible to positively cause the air flow flowing in the groove 70 in the tire circumferential direction TC to collide with the projection 100 to positively generate turbulences for cooling the inside of the groove 70. Therefore, it is possible to enhance the effect of suppressing the temperature rise of the tread part 10.

In addition, in the tire 1 according to this embodiment, the angle θ1 formed between the extending direction of the first projection part 110 and the tire circumferential direction TC, and the angle θ2 formed between the extending direction of the second projection part 120 and the tire circumferential direction TC are 10 degrees or more and 60 degrees or less.

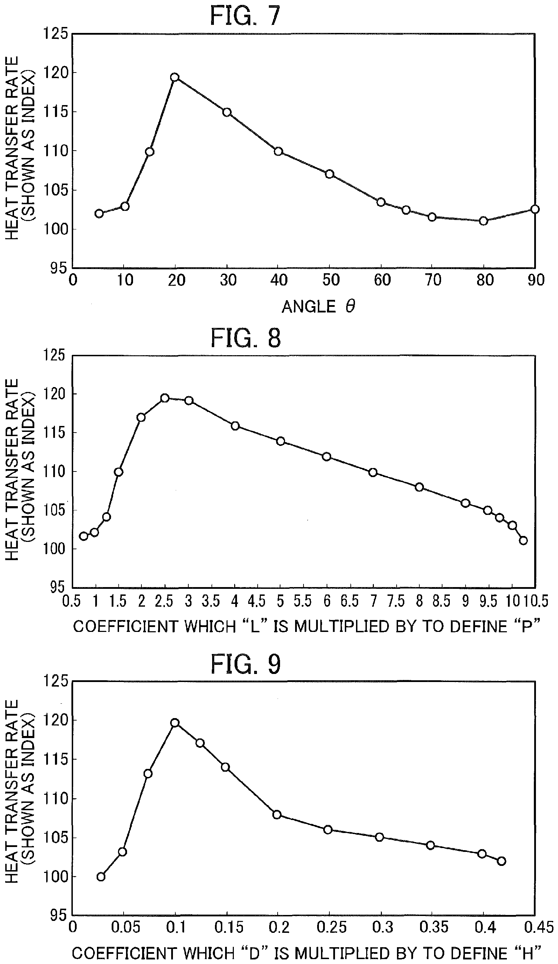

Here, Fig. 7 shows a graph illustrating measurement results of measuring the relationship between angles of an extending directions of the first and second projection parts with respect to the tire circumferential direction, and the heat transfer rate (showing the index) at the groove. Note that in the graph of Fig. 7, the value "100" of the heat transfer rate indicates the heat transfer rate of a tire which is not provided with the projection 100 (reference value).

As illustrated in Fig. 7, when the angle θ1 and the angle θ2 are 10 degrees or more, an acute angle part formed by the projection 100 and the one groove wall 71 (or the other groove wall 73) curbs the weakening of the air flows AR1 and AR2 flowing in the groove 70. In addition, since it is easy to manufacture the projections 100 in the groove 70, the convenience in manufacturing is improved.

On the other hand, when the angle θ1 and the angle θ2 are 60 degrees or less, it is possible to efficiently change the air flow AR2 flowing in the groove 70 into a spiral flow. This increases the amount of air passing through the groove bottom 72, and dissipates heat efficiently from the tread part 10.

Note that it is more preferable that the angle θ1 and the angle θ2 be 15 degrees or more and 40 degrees or less. With this, as illustrated in Fig. 7, the heat transfer rate exceeds the value "103" where the effect is positively obtained when the tire is mounted, and the certainty of the effect of suppressing the temperature rise of the tread part 10 is improved.

In addition, for the tire 1 according to this embodiment, when L is the length of the projection 100 along the groove center line CL70 passing through the center of the groove 70 and P is the predetermined interval in a tread surface view of the tire 1, it is preferable to satisfy the relation 0.75L ≤ P ≤ 10L.

Here, Fig. 8 shows a graph illustrating measurement results of measuring the relationship between a coefficient which the length L of the projection 100 is multiplied by to define the predetermined interval P and the heat transfer rate at the groove 70. Note that in the graph of Fig. 8, the value "100" of the heat transfer rate indicates the heat transfer rate of a tire which is not provided with the projection 100 (reference value). The coefficient can also be expressed as the ratio of the predetermined interval P to the length L, P/L.

As illustrated in Fig. 8, when the projection 100 satisfies 0.75L ≤ P, the number of the projections 100 provided in the groove 70 is not too many, and it is possible to curb the decrease of the air speed flowing through the groove 70. When the projection 100 satisfies P ≤ 10L, the number of the projections 100 provided in the groove 70 is not too few, and the air flows AR1 and AR2 change into spiral (swirling) flows effectively.

In addition, it is preferable to satisfy the relation 1.25L < P, it is more preferable to satisfy the relation 1.5L < P, and it is further preferable to satisfy the relation 2.0L < P. By satisfying these relationships, the number of the projections 100 provided in the groove 70 will be more suitable. In addition, since the area of the groove bottom 72 on which the air flows AR1 and AR2 pass is not too small, heat is dissipated efficiently from the groove bottom 72. With this, as illustrated in Fig. 8, the heat transfer rate exceeds the value "103" where the effect is positively obtained when the tire is mounted, and the certainty of the effect of suppressing the temperature rise of the tread part 10 is improved.

In addition, for the tire 1 according to this embodiment, when H is the height of the first projection part 110 and the second projection part 120 from the groove bottom 72, and D is the depth from the tread ground contact surface 11 of the groove 70 to the groove bottom 72, it is preferable to satisfy the relation 0.03D < H ≤ 0.4D.

Here, Fig. 9 shows a graph illustrating measurement results of measuring the relationship between a coefficient which the groove depth D is multiplied by to define the height H and the heat transfer rate at the groove 70. Note that in the graph of Fig. 9, the value "100" of the heat transfer rate indicates the heat transfer rate of a tire which is not provided with the projection 100 (reference value). The coefficient can also be expressed as the ratio of the height H to the groove depth D, H/D.

As illustrated in Fig. 9, when the relation 0.03D < H is satisfied, the height H of the first projection part 110 and the second projection part 120 is larger than or equal to a predetermined height, which makes it possible to efficiently change the air flows AR1 and AR2 flowing in the groove 70 into spiral flows. This increases the amount of air passing through the groove bottom 72, and dissipates heat efficiently from the tread part 10. When the relation H ≤ 0.4D is satisfied, the air flows AR1 and AR2 changed into spiral flows are likely to reach the groove bottom 72, and accordingly heat is dissipated efficiently from the groove bottom 72.

Moreover, when the relation 0.05D ≤ H is satisfied and the relation H ≤ 0.35D is satisfied, as illustrated in Fig. 9, the heat transfer rate exceeds the value "103" where the effect is positively obtained when the tire is mounted, and the certainty of the effect of suppressing the temperature rise of the tread part 10 is improved.

In addition, for the tire 1 according to this embodiment, when the groove width W is the width of the groove 70, it is preferable that the distance Lx between the first projection part 110 and the second projection part 120 in the direction orthogonal to the extending direction of the first projection part 110 be 0.1 times or more and 0.3 times or less the groove width W.

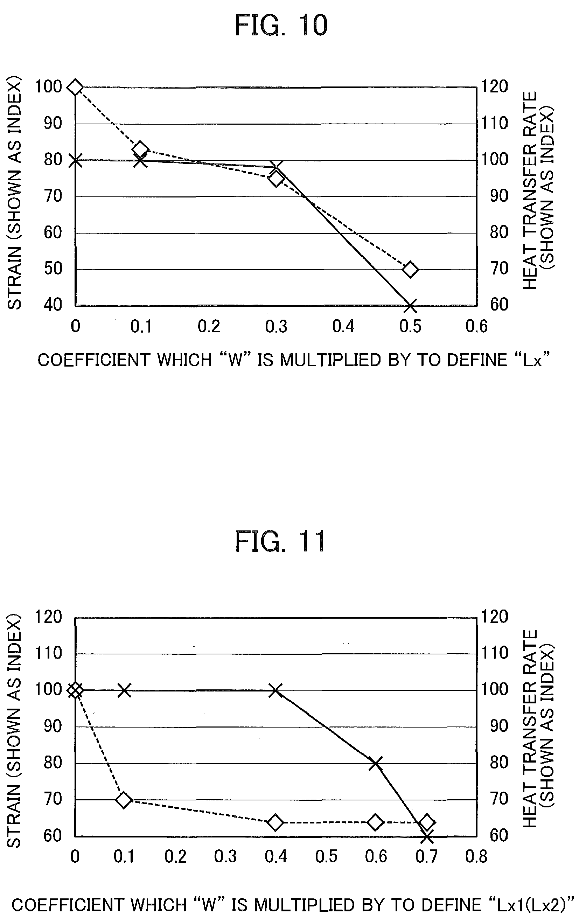

Here, Fig. 10 shows a graph illustrating measurement results of measuring the relationship between a coefficient which the groove width W is multiplied by to define the distance Lx and the heat transfer rate at the groove 70, and the relationship between the coefficient and the strain generated in the first and second projection parts. Note that in Fig. 10, the relationship between the coefficient and the heat transfer rate is indicated by "a solid line (symbols ×)", and the relationship between the coefficient and the strain is indicated by "a broken line (square symbols)". In the graph of Fig. 10, the value "100" of the heat transfer rate and the value "100" of the strain indicate the heat transfer rate (reference value) and the strain (reference value) of a tire which is not provided with the projection 100. The coefficient can also be expressed as the ratio of the distance Lx to the groove width W, Lx/W.

When the distance Lx between the first projection part 110 and the second projection part 120 is 0.1 times or more the groove width W, even if the first projection part 110 and the second projection part 120 are deformed by receiving compression force from the land parts 80, it is possible to prevent the first projection part 110 and the second projection part 120 from contacting each other. As illustrated in Fig. 10, this makes it possible to reduce the strain generated in the first projection part 110 and the second projection part 120. On the other hand, when the distance Lx between the first projection part 110 and the second projection part 120 is 0.3 times the groove width W, it is possible to curb the entrance of the air flows AR1 and AR2 into (a gap) between the first projection part 110 and the second projection part 120, and more positively generate the air flows AR1 and AR2 that go over the projection 100.

Note that it is more preferable that the distance Lx between the first projection part 110 and the second projection part 120 be 0.2 times or more and 0.3 times or less the groove width W.

In addition, for the tire 1 according to this embodiment, it is preferable that both the groove wall distance Lw1 between the terminal part 110a of the first projection part 110 and the other groove wall 73 and the groove wall distance Lw2 between the terminal part 120a of the second projection part 120 and the one groove wall 71 be 0.1 times or more and 0.4 times or less the groove width W.

Here, Fig. 11 shows a graph illustrating measurement results of measuring the relationship between a coefficient which the groove width W is multiplied by to define the groove wall distance Lw1 and the groove wall distance Lw2, and the heat transfer rate at the groove 70, and the relationship between the coefficient and the strain generated in the first and second projection parts. Note that in Fig. 11, the relationship between the coefficient and the heat transfer rate is indicated by "a solid line (symbols ×)", and the relationship between the coefficient and the strain is indicated by "a broken line (square symbols)". In the graph of Fig. 11, the value "100" of the heat transfer rate and the value "100" of the strain indicate the heat transfer rate (reference value) and the strain (reference value) of a tire which is not provided with the projection 100. The coefficients can also be expressed as the ratio of the groove wall distance Lw1 to the groove width W, Lw1/W, and the ratio of the groove wall distance Lw2 to the groove width W in the same way.

When the groove wall distance Lw1 of the first projection part 110 is 0.1 times or more the groove width W, it is possible to more positively reduce the compression force received by the first projection part 110 from the other groove wall 73 which is propagated through the groove bottom 72. Also, when the groove wall distance Lw2 of the second projection part 120 is 0.1 times or more the groove width W, it is possible to more positively reduce the compression force received by the second projection part 120 from the one groove wall 71 which is propagated through the groove bottom 72. With these, as illustrated in Fig. 11, since it is possible to reduce the strains generated in the first projection part 110 and the second projection part 120, it is possible to curb the occurrence of a crack in the first projection part 110 and the second projection part 120.

On the other hand, when the groove wall distance Lw1 of the first projection part 110 and the groove wall distance Lw2 of the second projection part 120 are 0.4 times or less the groove width W, even if the first projection part 110 and the second projection part 120 are deformed in the tire width direction TW along with the deformations of the one groove wall 71 and the other groove wall 73, it is possible to prevent a gap passing through in the tire circumferential direction TC from being formed between the first projection part 110 and the second projection part 120. Since this makes it possible to more positively generate the air flows AR1 and AR2 going over the projection 100, it is possible to obtain the heat transfer rate, and thereby curb the temperature rise of the tread part 10.

Note that it is more preferable that the groove wall distance Lw1 and the groove wall distance Lw2 be 0.3 times or more and 0.4 times or less the groove width W. This makes it possible to more positively curb the occurrence of a crack in the first projection part 110 and the second projection part 120, while more positively suppressing the temperature rise of the tread part 10.

In addition, for the tire 1 according to this embodiment, it is preferable that the width W110 of the first projection part 110 and the width W120 of the second projection part 120 be 1 mm or more and 4 mm or less.

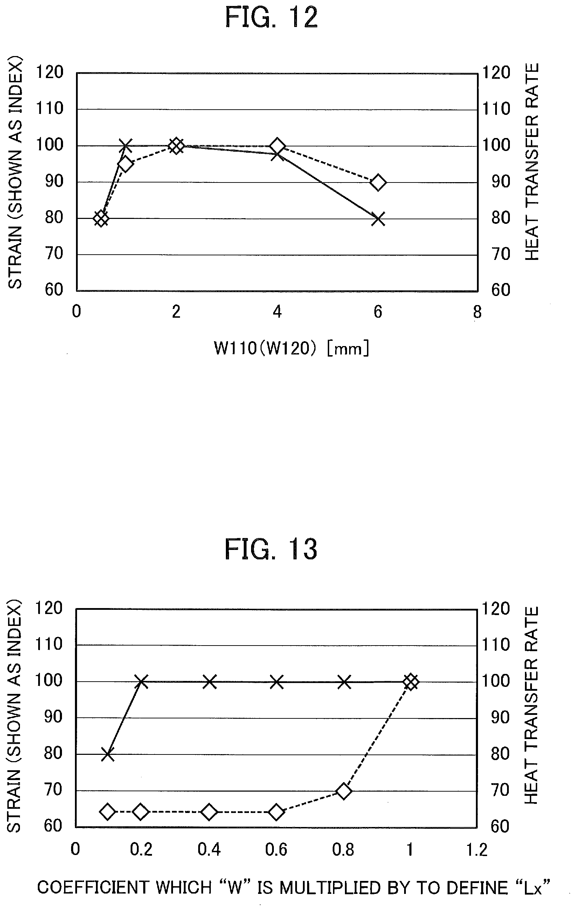

Here, Fig. 12 shows a graph illustrating measurement results of measuring the relationship between the width W110 of the first projection part 110 (and the width W120 of the second projection part 120) and the heat transfer rate at the groove 70, and the relationship between the width W110 (and the width W120) and the strain generated in the first and second projection parts. Note that in Fig. 12, the relationship between the width W110 (and the width W120) and the heat transfer rate is indicated by "a solid line (symbols ×)", and the relationship between the width W110 (and the width W120) and the strain is indicated by "a broken line (square symbols)". In the graph of Fig. 12, the value "100" of the heat transfer rate and the value "100" of the strain indicate the heat transfer rate (reference value) and the strain (reference value) of a tire which is not provided with the projection 100.

When the width W110 of the first projection part 110 and the width W120 of the second projection part 120 are 1mm or more, it is possible to hold the rigidity of the projection itself for stably generating turbulences. As illustrated in Fig. 12, this makes it possible to obtain the heat transfer rate. In addition, it is possible to curb the occurrence of molding defects such as short molding during the tire manufacturing.

On the other hand, when the width W110 of the first projection part 110 and the width W120 of the second projection part 120 are 4 mm or less, it is possible to make wide the area of the groove bottom 72 other than the first projection parts 110 and the second projection parts 120, which improves the effect of cooling the groove bottom 72 by the air flows AR1 and AR2.

Note that it is more preferable that the width W110 of the first projection part 110 and the width W120 of the second projection part 120 be 1 mm or more and 2mm or less. By doing so, it is possible to more positively suppress the temperature rise of the tread part 10, while more positively curbing the occurrence of molding defects.

In addition, for the tire 1 according to this embodiment, it is preferable that the terminal distance Lw between the terminal part 110a of the first projection part 110 and the terminal part 120a of the second projection part 120 in the tire width direction TW be 0.2 times or more and 0.6 times or less the groove width W.

Here, Fig. 13 shows a graph illustrating measurement results of measuring the relationship between a coefficient which the groove width W is multiplied by to define the terminal distance Lw and the heat transfer rate at the groove 70, and the relationship between the coefficient and the strain generated in the first and second projections. Note that in Fig. 13, the relationship between the coefficient and the heat transfer rate is indicated by "a solid line (symbols ×)", and the relationship between the coefficient and the strain is indicated by "a broken line (square symbols)". In the graph of Fig. 13, the value "100" of the heat transfer rate and the value "100" of the strain indicate the heat transfer rate (reference value) and the strain (reference value) of a tire which is not provided with the projection 100. The coefficient can also be expressed as the ratio of the terminal distance Lw to the groove width W, Lw/W.

When the terminal distance Lw is 0.2 times or more the groove width W, even though the first projection part 110 and the second projection part 120 are deformed along with the deformations of the one groove wall 71 and the other groove wall 73, it is possible to prevent a gap passing through in the tire circumferential direction TC from being formed between the first projection part 110 and the second projection part 120. As illustrated in Fig. 13, since this makes it possible to more positively generate the air flows AR1 and AR2 going over the projection 100, it is possible to obtain the heat transfer rate, and thereby curb the temperature rise of the tread part 10.

On the other hand, when the terminal distance Lw is 0.6 times or less the groove width W, it is possible to keep the heat dissipation effect of the first projection part 110 and the second projection part 120, while curbing the occurrence of a crack due to the deformations of the first projection part 110 and the second projection part 120.

Note that it is more preferable that the terminal distance Lw be 0.2 times or more and 0.3 times or less the groove width W.

### [Example]

Next, descriptions will be provided for an example carried out to confirm the effect of the tire according to the embodiment of the present invention. First, Comparative Examples 1 and 2 and Example 1 were prepared.

For Comparative Example 1, a tire in which the projection formed in the groove linearly continued from the one groove wall to the other groove wall was used.

For Comparative Example 2, a tire in which the projection formed in the groove linearly extended from the one groove wall short of the other groove wall was used. In other words, for Comparative Example 2, a tire in which one end of the projection was connected to a groove wall and the other end of the projection was away from the other groove wall was used.

For Example 1, a tire according to the first embodiment described above was used. Note that the tire size and the rim width of all of Comparative Examples 1 and 2 and Example 1 are as follows.
- tire size: 11R22.5
- rim width: 8.25 × 22.5

Next, an internal pressure 700 kPa (standard internal pressure) and a load 3000 kg (about 110% load) were applied to the prepared Comparative Examples 1 to 2 and Example 1, and rolling tests were conducted using a drum tire testing machine with a drum diameter of 1.7 m. In the rolling tests, after rolling of 50000 km at 65 km/h, the length of the crack generated in the projection was measured.

The heat dissipation properties of Comparative Examples 1 and 2 and Example 1 were also evaluated. Specifically, the heat dissipation properties were evaluated based on the measurement results obtained by conducting the tests for measuring each heat conductivities.

Note that Table 1 shows the measurement results of the rolling tests and the measurement results of the heat conductivities. The heat conductivities shown in Table 1 are indicated by an index using Comparative Example 1 as a reference, and the larger value indicates the higher heat conductivity. In Table 1, the heat conductivity of Comparative Example 1 is indicated as "100".

**[Table 1]**

| | Comparative Example 1 | Comparative Example 2 | Example 1 |
|---|---|---|---|
| Length of Crack | 6.0 mm | 4.0 mm | 0.5 mm |
| Thermal Conductivity [INDEX] | 100 | 100 | 100 |

As shown in Table 1, it was confirmed that the length of the crack generated in the projection of the tire according to Example 1 was reduced significantly, compared to the tires according to Comparative Examples 1 and 2. In other words, it was confirmed that the tire according to Example 1 curbs the occurrence of a crack in the projection.

It was also confirmed that the tire according to Example 1 has the same level of heat conductivity as in the tires according to Comparative Examples 1 and 2 and is capable of sufficiently suppressing the temperature rise of the tread part 10.

### [Other Embodiments]

Next, other embodiments of the present invention will be described. Although the tire 1 is preferably used for a heavy duty tire (TBR tire) mounted on a truck or a bus (TB), the tire 1 may be used, for example, for a tire for construction vehicles (ORR tires), such as dump trucks and articulated dump trucks running on crushed stones, mines, and dam sites, or may be used for a tire for passenger vehicles.

In the above embodiment, descriptions were provided taking an example where the groove 70 extends in parallel along the tire circumferential direction TC. However, the groove 70 may be inclined by several degrees (for example, 10 degrees or less) with respect to the tire circumferential direction TC.

[DELETED]

In the above embodiment, the distance Lx between the first projection part 110 and the second projection part 120 was defined by the relationship with the groove width W of the groove 70. However, the distance Lx may be defined by the width W110 of the first projection part 110 (and the width W120 of the second projection part 120). For example, the distance Lx between the first projection part 110 and the second projection part 120 may be equal to the width W110 of the first projection part 110 (and the width W120 of the second projection part 120), or may be smaller than the width W110 of the first projection part 110 (and the width W120 of the second projection part 120).

In the same way as above, the present invention naturally includes various embodiments and the like which are not described herein. Further, various aspects of the invention can be created by appropriately combining multiple constituents disclosed in the above embodiments. Hence, the technical scope of the present invention is defined only by the matters used to specify the invention according to the claims, which are reasonable from the above descriptions.

[DELETED]

### INDUSTRIAL APPLICABILITY

The present invention makes it possible to provide a tire in which the durability of the projection is improved by curbing the occurrence of a crack in the projection formed in the groove, while positively suppressing the temperature rise of the tread part.

### REFERENCE SIGNS LIST

- 1: tire
- 10: tread part
- 11: tread ground contact surface
- 20: side wall
- 30: bead
- 40: belt layer
- 52: carcass layer
- 60: groove
- 70: groove
- 71: groove wall
- 72: groove bottom
- 73: groove wall
- 80: land part
- 81: land part
- 82: land part
- 100: projection
- 110: first projection part
- 110a: terminal part
- 120: second projection part
- 120a: terminal part

## Claims

1. A tire (1) in which a groove (70) extending in a tire circumferential direction (TC) is formed in a tread part (10), wherein
a projection (100) extending in a direction intersecting the tire circumferential direction (TC) is provided at a groove bottom (72) of the groove (70),
the projection (100) includes:
a first projection part (110) extending from one groove wall (71) forming the groove (70) toward the other groove wall (73) forming the groove (70), and terminating short of the other groove wall (73); and
a second projection part (120) extending from the other groove wall (73) toward the one groove wall (71), and terminating short of the one groove wall (71), and
a terminal part (110a) of the first projection part (110) terminating short of the other groove wall (73) is arranged closer to the other groove wall (73) than a terminal part (120a) of the second projection part (120) terminating short of the one groove wall (71) making it possible to prevent a gap passing through the projection (100) in the tire circumferential direction (TC) from being formed between the one groove wall (71) and the other groove wall (73), and wherein
an angle formed between an extending direction of the first projection part (110) and the tire circumferential direction (TC), and an angle formed between an extending direction of the second projection part (120) and the tire circumferential direction (TC) are within a range of 10 to 60 degrees.

2. The tire (1) according to claim 1, wherein
when a groove width W is a width of the groove (70), a distance Lx between the first projection part (110) and the second projection part (120) in a direction orthogonal to an extending direction of the first projection part (110) is 0.1 times or more and 0.3 times or less the groove width W.

3. The tire (1) according to claim 1 or 2, wherein
when a groove width W is a width of the groove (70), a groove wall distance Lw1 between the terminal part (110a) of the first projection part (110) and the other groove wall (73), and a groove wall distance Lw2 between the terminal part (120a) of the second projection part (120) and the one groove wall (71) are 0.1 times or more and 0.4 times or less the groove width W.

4. The tire (1) according to any one of claims 1 to 3, wherein
a plurality of the projections (100) are provided in the tire circumferential direction (TC) with a predetermined interval, and
in a tread surface view of the tire (1), when L is a length of the projection (100) along a groove center line passing through a center of the groove (70), and P is the predetermined interval, a relation 0.75L ≤ P ≤ 10L is satisfied.

5. The tire (1) according to any one of claims 1 to 4, wherein
a width (W110) of the first projection part (110) and a width (W120) of the second projection part (120) are 1 mm or more and 4 mm or less.

6. The tire (1) according to any one of claims 1 to 5, wherein
when a groove width W is a width of the groove (70), a terminal distance Lw in a tire width direction between the terminal part (110a) of the first projection part (110) and the terminal part (120a) of the second projection part (120) is 0.2 times or more and 0.6 times or less the groove width W.

## Patentansprüche

1. Reifen (1), in dem eine Rille (70), die sich in einer Reifenumfangsrichtung (TC) erstreckt, in einem Laufflächenteil (10) geformt ist, wobei
ein Vorsprung (100), der sich in einer Richtung erstreckt, welche die Reifenumfangsrichtung (TC) schneidet, an einer Rillensohle (72) der Rille (70) geformt ist,
wobei der Vorsprung (100) Folgendes einschließt:
einen ersten Vorsprungsteil (110), der sich von der einen Rillenwand (71), welche die Rille (70) bildet, hin zu der anderen Rillenwand (73), welche die Rille (70) bildet, erstreckt und kurz vor der anderen Rillenwand (73) endet, und
ein zweiten Vorsprungsteil (120), der sich von der anderen Rillenwand (73) hin zu der einen Rillenwand (71) erstreckt und kurz vor der einen Rillenwand (71) endet, und
wobei ein Abschlussteil (110a) des ersten Vorsprungsteils (110), der kurz vor der anderen Rillenwand (73) endet, näher zu der anderen Rillenwand (73) angeordnet ist als ein Abschlussteil (120a) des zweiten Vorsprungsteils (120), der kurz vor der einen Rillenwand (71) endet, was es möglich macht, zu verhindern, dass ein Spalt, der in der Reifenumfangsrichtung (TC) durch den Vorsprung (100) hindurchgeht, zwischen der einen Rillenwand (71) und der anderen Rillenwand (73) gebildet wird, und wobei
ein Winkel, der zwischen einer Ausdehnungsrichtung des ersten Vorsprungsteils (110) und der Reifenumfangsrichtung (TC) gebildet wird, und ein Winkel, der zwischen einer Ausdehnungsrichtung des zweiten Vorsprungsteils (120) und der Reifenumfangsrichtung (TC) gebildet wird, innerhalb eines Bereichs von 10 bis 60 Grad liegen.

2. Reifen (1) nach Anspruch 1, wobei,
wenn eine Rillenbreite W eine Breite der Rille (70) ist, eine Entfernung Lx zwischen dem ersten Vorsprungsteil (110) und dem zweiten Vorsprungsteil (120) in einer Richtung, senkrecht zu einer Ausdehnungsrichtung des ersten Vorsprungsteils (110), das 0,1-Fache oder mehr und das 0,3-Fache oder weniger der Rillenbreite W beträgt.

3. Reifen (1) nach Anspruch 1 oder 2, wobei,
wenn eine Rillenbreite W eine Breite der Rille (70) ist, eine Rillenwandentfernung Lw1 zwischen dem Abschlussteil (110a) des ersten Vorsprungsteils (110) und der anderen Rillenwand (73) und eine Rillenwandentfernung Lw2 zwischen dem Abschlussteil (120a) des zweiten Vorsprungsteils (120) und der einen Rillenwand (71) das 0,1-Fache oder mehr und das 0,4-Fache oder weniger der Rillenbreite W betragen.

4. Reifen (1) nach einem der Ansprüche 1 bis 3, wobei
mehrere der Vorsprünge (100) in der Reifenumfangsrichtung (TC) mit einem vorbestimmten Abstand bereitgestellt werden und
in einer Laufflächenansicht des Reifens (1), wenn L eine Länge des Vorsprungs (100) entlang einer Rillenmittellinie ist, die durch eine Mitte der Rille (70) hindurchgeht, und P der vorbestimmte Abstand ist, eine Beziehung von 0,75L ≤ P ≤ 10L erfüllt ist.

5. Reifen (1) nach einem der Ansprüche 1 bis 4, wobei
eine Breite (W110) des ersten Vorsprungsteils (110) und eine Breite (W120) des zweiten Vorsprungsteils (120) 1 mm oder mehr und 4 mm oder weniger betragen.

6. Reifen (1) nach einem der Ansprüche 1 bis 5, wobei,
wenn eine Rillenbreite W eine Breite der Rille (70) ist, eine Abschlussentfernung Lw in einer Reifenbreitenrichtung zwischen dem Abschlussteil (110a) des ersten Vorsprungsteils (110) und dem Abschlussteil (120a) des zweiten Vorsprungsteils (120) das 0,2-Fache oder mehr und das 0,6-Fache oder weniger der Rillenbreite W beträgt.

## Revendications

1. Pneu (1) dans lequel une rainure (70) s'étendant dans une direction circonférentielle du pneu (TC) est formée dans une partie de bande de roulement (10), dans lequel
une projection (100) s'étendant dans une direction coupant la direction circonférentielle du pneu (TC) est ménagée dans le fond (72) de la rainure (70),
la projection (100) inclut :
une première partie de projection (110) s'étendant depuis une paroi de la rainure (71) formant la rainure (70) vers l'autre paroi de rainure (73) formant la rainure (70) et se terminant peu avant l'autre paroi de rainure (73); et
une seconde partie de projection (120) s'étendant depuis l'autre paroi de rainure (73) vers la première paroi de rainure (71), et se terminant peu avant la première paroi de rainure (71), et
une partie terminale (110a) de la première partie de projection (110) se terminant peu avant l'autre paroi de rainure (73) est agencée plus près de l'autre paroi de rainure (73) qu'une partie terminale (120a) de la seconde partie de projection (120) se terminant peu avant la première paroi de rainure (71) ce qui permet d'éviter qu'un intervalle passant à travers la projection (100) dans la direction circonférentielle du pneu (TC) ne soit formé entre l'une paroi de rainure (71) et l'autre paroi de rainure (73), et dans lequel
un angle formé entre une direction d'extension de la première partie de projection (110) et la direction circonférentielle du pneu (TC), et un angle formé entre une direction d'extension de la seconde partie de projection (120) et la direction circonférentielle du pneu (TC) sont dans une plage comprise entre 10 et 60 degrés.

2. Pneu (1) selon la revendication 1, dans lequel
lorsqu'une largeur de rainure W est une largeur de la rainure^(70), une distance Lx entre la première partie de projection (110) et la seconde partie de projection (120) dans une direction perpendiculaire à une direction d'extension de la première partie de projection (110) est 0,1 fois ou plus et 0,3 fois ou moins la largeur de la rainure W.

3. Pneu (1) selon la revendication 1 ou 2, dans lequel
lorsqu'une largeur de rainure W est une largeur de la rainure (70), une distance de la paroi de rainure Lw1 entre la partie terminale (110a) de la première partie de projection (110) et l'autre paroi de rainure (73), et une distance de paroi de rainure Lw2 entre la partie terminale (120a) de la seconde partie de projection (120) et la première paroi de rainure (71) sont 0,1 fois ou plus et 0,4 fois ou moins la largeur de rainure W.

4. Pneu (1) selon l'une quelconque des revendications 1 à 3, dans lequel
une pluralité des projections (100) sont ménagées dans la direction circonférentielle du pneu (TC) à un intervalle prédéterminé, et
dans une vue de la surface de la bande de roulement du pneu (1), lorsque L est une longueur de la projection (100) le long d'une ligne centrale de rainure passant à travers un centre de la rainure (70), et P est l'intervalle prédéterminé, une relation 0,75L ≤ P ≤ 10L est satisfaite.

5. Pneu (1) selon l'une quelconque des revendications 1 à 4, dans lequel
une largeur (W110) de la première partie de projection (110) et une largeur (W120) de la seconde partie de projection (120) sont de 1 mm ou plus et de 4 mm ou moins.

6. Pneu (1) selon l'une quelconque des revendications 1 à 5, dans lequel
lorsqu'une largeur de rainure W est une largeur de la rainure (70), une distance terminale Lw dans une direction de la largeur du pneu entre la partie terminale (110a) de la première partie de projection (110) et la partie terminale (120a) de la seconde partie de projection (120) est 0,2 fois ou plus et 0,6 fois ou moins la largeur de la rainure W.
